(19) Europäisches Patentamt
European Patent Office
Office européen des brevets

(11) Veröffentlichungsnummer: **0 271 789**
**A2**

(12) # EUROPÄISCHE PATENTANMELDUNG

(21) Anmeldenummer: **87118009.7**

(22) Anmeldetag: **05.12.87**

(51) Int. Cl.⁴: **C08G 18/42**, C08G 18/14, C08G 63/16

(30) Priorität: **13.12.86 DE 3642667**

(43) Veröffentlichungstag der Anmeldung: **22.06.88 Patentblatt 88/25**

(84) Benannte Vertragsstaaten: **AT BE CH DE ES FR GB IT LI NL SE**

(71) Anmelder: **BASF Aktiengesellschaft**
**Carl-Bosch-Strasse 38**
**D-6700 Ludwigshafen(DE)**

(72) Erfinder: **Streu, Joachim, Dr.**
**Grellestrasse 24**
**D-2840 Diepholz(DE)**
Erfinder: **Marx, Matthias, Dr.**
**Feuerhausstrasse 11 a**
**D-8080 Fuerstenfeldbruck(DE)**
Erfinder: **Weyland, Peter, Dr.**
**Ludwigshafener Strasse 12 a**
**D-6710 Frankenthal(DE)**
Erfinder: **Scherzer, Dietrich, Dr.**
**Millfield House 74 Cropwell Road**
**Radcliff-on-Trent Nottingham NG12 2JG(GB)**
Erfinder: **Straehle, Wolfgang, Dr.**
**Hampeweg 9**
**D-6900 Heidelberg(DE)**

(54) **Bei Raumtemperatur flüssige Polyesterpolyole auf Basis von 2-Methylpentandiol-1,5, 2-Ethylbutandiol-1,4, 2-Methyl-glutarsäure und/oder 2-Ethylbernsteinsäure sowie den entsprechenden Dicarbonsäurederivaten, Verfahren zu deren Herstellung und deren Verwendung zur Herstellung von Kunststoffen nach dem Polyisocyanat-poly-additionsverfahren.**

(57) Die Erfindung beschreibt bei 25°C flüssige Polyester-polyole mit einer durchschnittlichen Funktionalität von 2 bis 3, einer Hydroxylzahl von 25 bis 400, einer Säurezahl von kleiner als 10 und einer Viskosität bei 25°C von 200 bis $10^5$m.Pa.s, die Einheiten mit mindestens einer der Strukturen

$-O-CH_2-CH(CH_3)-CH_2-CH_2-CH_2-O-$
$-O-CH_2-CH(C_2H_5)-CH_2-CH_2-O-$,
$-OC-CH(CH_3)-CH_2-CH_2-CO-$oder
$-OC-CH(C_2H_5)-CH_2-CO-$

gebunden enthalten.

Die Polyester-polyole können hergestellt werden durch Polykondensation oder Umesterung von 2-Methylpentandiol-1,5, 2-Ethylbutandiol-1,4, 2-Methylglutarsäure und/oder 2-Ethylbernsteinsäure oder deren Derivate gegebenenfalls unter Mitverwendung von anderen organischen Polycarbonsäuren und mehrwertigen aliphatischen Alkoholen.

Die erfindungsgemäßen Polyester-polyole eignen sich zur Herstellung von kompakten oder zelligen Polyurethan-oder Polyurethan-Polyharnstoff-Kunststoffen, vorzugsweise Polyurethan-Elastomeren, nach dem Polyisocyanat-polyadditionsverfahren.

EP 0 271 789 A2

# Bei Raumtemperatur flüssige Polyester-polyole auf Basis von 2-Methylpentandiol-1,5, 2-Ethylbutandiol-1,4, 2-Methylglutarsäure und/oder 2-Ethylbernsteinsäure sowie den entsprechenden Dicarbonsäurederivaten, Verfahren zu deren Herstellung und deren Verwendung zur Herstellung von Kunststoffen nach dem Polyisocyanat-polyadditionsverfahren

Die Herstellung von Polyester-polyolen und deren Verwendung zur Herstellung von Polyurethan-Kunststoffen nach dem Polyisocyanat-polyadditionsverfahren ist bekannt und wird in zahlreichen Literatur- und Patentpublikationen beschrieben. Verweisen möchten wir beispielsweise auf das Kunststoff-Handbuch, Band 7, Polyurethane, 1. Auflage, 1966, herausgegeben von A. Höchtlen und R. Vieweg, und 2. Auflage, 1983, herausgegeben von G. Oertel, Carl Hanser Verlag, München, Wien.

Die Polyester-polyole werden üblicherweise aus Polycarbonsäuren und mehrwertigen Alkoholen durch Schmelzkondensation oder durch Umesterung von Dicarbonsäureestern in Gegenwart von Säuren oder Metallsalzen als Katalysator hergestellt. Zweckmäßigerweise wird die Polykondensation unter vermindertem Druck durchgeführt, um das bei der Kondensation entstehende Wasser oder den abgespaltenen Alkohol aus der Reaktionsmischung abzudestillieren und die Gleichgewichtsreaktion hierbei in Richtung der Polyesterbildung zu verschieben. Auf diese Weise können beispielsweise Polyester-polyole mit Säurezahlen größer als 5 in relativ kurzen Reaktionszeiten hergestellt werden.

Obgleich Polyester-polyole, insbesondere solche auf der Grundlage von Adipinsäure und Alkandiolen, Alkandiolgemischen oder Mischungen aus Alkandiolen und höherwertigen Alkoholen, in großen Mengen zur Herstellung von Polyurethan-Kunststoffen für eine Vielzahl von Anwendungsbereichen eingesetzt werden, besitzen die Produkte auch Nachteile. Nachteilig ist insbesondere, daß die Polyester-polyole unter üblichen Lagerbedingungen vollständig oder teilweise auskristallisieren oder eine derartig hohe Viskosität aufweisen, daß sie nicht direkt bei Raumtemperatur nach dem Polyisocyanat-polyadditionsverfahren auf herkömmlichen Vorrichtungen verarbeitet werden können. Die Polyester-polyole müssen üblicherweise in ex-geschützten Apparaten aufgeschmolzen und homogenisiert werden und können nur bei erhöhten Temperaturen in kostspieligen temperierbaren Vorrichtungen zur Reaktion gebracht werden. Die Herstellung von Polyurethan-Fertigteilen wird dadurch verteuert.

Zur Vermeidung dieses Nachteils werden nach Angaben der EP-PS 017 060 zur Herstellung von Polyurethan-Elastomeren und nach Angaben der EP-PS 056 122 (US 4 362 825) zur Herstellung von flexiblen Polyurethan-Weichschaumstoffen flüssige Polyester-polyole mit Hydroxylzahlen von 40 bis 80 verwendet, die erhalten werden durch Polykondensation von organischen Dicarbonsäuren mit Polyolmischungen aus mindestens vier 2-und 3-wertigen Alkoholen auf der Grundlage von 1,4-Butandiol, 1,6-Hexandiol, 1,5-Pentandiol und/oder Diethylenglykol und einem Alkantriol, wie z.B. Glycerin und/oder Trimethylolpropan, in bestimmten definierten Mengenverhältnissen. Die auf diese Weise erhaltenen Polyurethan-Elastomeren besitzen ein günstiges Kälteverhalten und gute Hydrolysebeständigkeit bei hoher mechanischer Festigkeit sowie einen sehr guten Druckverformungsrest und die Polyurethan-Weichschaumstoffe weisen neben einer verbesserten Hydrolysebeständigkeit eine sehr gute Stanzbarkeit auf. Polyolmischungen der genannten Art sind jedoch relativ teuer, da die Aufbaukomponenten teilweise durch Reduktion der entsprechenden Dicarbonsäuregemische erhalten werden und stehen nur in begrenzten Mengen für die Herstellung von Polyester-polyolen zur Verfügung. Ferner bedarf die Polykondensationsreaktion eines gewissen technischen Geschicks.

Polyester-polyole, hergestellt durch Polykondensation von Mischungen aus Bernstein-, Glutar-und Adipinsäure und mehrwertigen, vorzugsweise aliphatischen Alkoholen, sind ebenfalls nicht neu. Die Produkte eignen sich gemäß EP-A-00 44 969 zur Herstellung von thermoplastischen Polyurethan-Elastomeren, die ein gutes mechanisches Eigenschaftsniveau, insbesondere eine verbesserte Reiß-und Abriebfestigkeit, besitzen und finden nach Angaben der GB-PS 882 603 und GB-PS 1 475 541 Verwendung als Ausgangsstoffe für Polyurethan-Schaumstoffe.

Die DE-OS 36 14 038 beschreibt ebenfalls bei Raumtemperatur flüssige, niedrigviskose Polyester-polyole, die Einheiten mit der Struktur $-OCH_2-CH(CH_3)-CH_2-CH_2O-$gebunden enthalten. Aus diesen Polyester-polyolen nach dem Polyisocyanat-polyadditionsverfahren hergestellte Kunststoffe, insbesondere kompakte oder zellige Polyurethan-oder Polyurethan-Polyharnstoff-Elastomere, besitzen ein hohes mechanisches Eigenschaftsniveau und eine gute Hydrolysestabilität.

Aus der DE-OS 26 09 207 (US 4 052 358) sind ferner pigmentierbare ungesättigte Polyesterharzzusammensetzungen mit geringer Schrumpfung bekannt, die als Glykolkomponente eine Mischung aus 15 bis 70 Mol-% Neopentylglykol und 10 bis 30 Mol-% 2,2-Bis-(4-hydroxycyclohexyl)-propan enthalten und wobei die Glykolkomponente 1 bis 15 Mol-% eines zusätzlichen mehrwertigen Alkohols aufweisen kann.

Vielfältige Anwendungen finden auch Polyurethan-Elastomere, die hergestellt werden durch Umsetzung

von höhermolekularen Polyhydroxylverbindungen, z.B. Polyether-oder Polyester-polyolen, organischen Polyisocyanaten, vorzugsweise aromatischen Diisocyanaten und niedermolekularen Kettenverlängerungsmitteln, und in einschlägigen Patent-und Literaturpublikationen, z.B. in dem obengenannten Kunststoff-Handbuch, Band VII, Polyurethane oder in Kunststoffe 68 (1978), Seiten 819 bis 825 sowie den dort genannten Literaturstellen, beschrieben werden.

Neben anderen mechanischen Eigenschaften, wie z.B. mechanische Festigkeit, Dehnung, Elastizität u.a. wird von den Polyurethan-Elastomeren insbesondere auch eine gute Hydrolysebeständigkeit und Kältestabilität gefordert. Diese Eigenschaften werden im wesentlichen durch eine geeignete Wahl der die Polyurethan-Elastomeren bildenden Ausgangsstoffe bestimmt. Polyurethan-Elastomere auf Basis von Polyester-polyolen sind relativ anfällig gegen Hydrolyse. Diese Hydrolyseinstabilität äußert sich in einem stetigen Abfall der mechanischen Eigenschaftswerte nach einer längeren Einwirkung von Wasser oder -dampf. Die Hydrolysestabilität der Elastomeren kann durch Verwendung bestimmter Polyester-polyole, z.B. von Hexandiol-1,6-polyadipaten, verbessert werden. Polyurethan-Elastomere aus Hexandiol-1,6-polyadipaten zeigen zwar eine ausreichende Hydrolysebeständigkeit; nachteilig ist jedoch die hohe Kristallisationsneigung der Hexandiol-1,6-polyadipate, die sich durch eine schlechte Kältefestigkeit der Polyurethan-Elastomeren äußert sowie ihr hoher Schmelzpunkt, der in der Regel Verarbeitungsprobleme mit sich bringt.

Durch die Verwendung von die Kristallisation störenden Diolmischungen bei der Polyester-polyolherstellung kann zwar das Kälteverhalten der Polyurethan-Elastomere verbessert werden; die Hydrolysestabilität der Polyurethan-Elastomeren wird dadurch jedoch nachteilig beeinflußt.

Die Aufgabe der vorliegenden Erfindung bestand darin, bei Raumtemperatur flüssige, möglichst niedrigviskose Polyester-polyole zu entwickeln, die auf üblichen Vorrichtungen problemlos nach dem Polyisocyanat-polyadditionsverfahren zu kompakten oder zelligen Kunststoffen mit gutem mechanischen Eigenschaftsniveau verarbeitet werden können.

Die Polyester-polyole sollten bei der Verwendung zur Herstellung von Polyurethan-Elastomeren Produkte mit hoher Hydrolysebeständigkeit und gleichzeitig gegenüber dem Stand der Technik verbesserter Kältefestigkeit ergeben.

Diese Aufgabe konnte überraschenderweise durch die vollständige oder teilweise Verwendung von 2-Methylpentandiol-1,5, 2-Ethylbutandiol-1,4, 2-Methylglutarsäure und/oder 2-Ethylbernsteinsäure sowie gegebenenfalls anderen organischen Polycarbonsäuren und mehrwertigen Alkoholen zur Herstellung von Polyester-polyolen gelöst werden.

Gegenstand der Erfindung sind somit bei 25°C flüssige Polyester-polyole, die Einheiten mit der Struktur

$-O-CH_2-CH(CH_3)-CH_2-CH_2-CH_2-O-$,
$-O-CH_2-CH(C_2H_5)-CH_2-CH_2-O-$,
$-OC-CH(CH_3)-CH_2-CH_2-CO-$,
$-OC-CH(C_2H_5)-CH_2-CO-$

oder Strukturgemische aus mindestens zwei der genannten Strukturen gebunden enthalten.

Gegenstand der Erfindung sind ferner ein Verfahren zur Herstellung von bei 25°C flüssigen Polyester-polyolen, die Einheiten mit mindestens einer der Strukturen

$-O-CH_2-CH(CH_3)-CH_2-CH_2-CH_2-O-$,
$-O-CH_2-CH(C_2H_5)-CH_2-CH_2-O-$,
$-OC-CH(CH_3)-CH_2-CH_2-CO-$oder
$-OC-CH(C_2H_5)-CH_2-CO-$

gebunden enthalten gemäß Anspruch 17 und die Verwendung der erfindungsgemäßen Polyester-polyole nach Anspruch 1 zur Herstellung von kompakten oder zelligen Polyurethan-oder Polyurethan-Polyharnstoff-Kunststoffen, vorzugsweise von kompakten oder zelligen Polyurethan-Elastomeren, nach dem Polyisocyanat-polyadditionsverfahren gemäß Patentanspruch 19.

Die erfindungsgemäßen Polyester-polyole besitzen eine durchschnittliche Funktionalität von 2 bis 3, vorzugsweise von 2 bis 2,5, eine Hydroxylzahl von 25 bis 400, vorzugsweise von 40 bis 80 für elastische, von 80 bis 160 für halbharte und von 160 bis 400 für harte Kunststoffe, eine Säurezahl von kleiner als 10 mg KOH/g, vorzugsweise kleiner als 2 mg KOH/g und insbesondere von 0,9 bis 0,2 mg KOH/g, und eine Viskosität bei 25°C von 200 bis $10^5$, vorzugsweise von 800 bis 20 000 m.Pa.s. Aus den erfindungsgemäßen Polyester-polyolen hergestellte kompakte oder zellige Polyurethane oder Polyurethan-Polyharnstoff-Kunststoffe besitzen für zahlreiche technische Anwendungen ein hohes mechanisches Eigenschaftsniveau und zeichnen sich insbesondere durch eine gute Hydrolysestabilität bei gleichzeitig verbesserter Kältefestigkeit und Verträglichkeit mit inerten physikalisch wirkenden Treibmitteln aus.

Die erfindungsgemäßen Polyester-polyole enthalten vorzugsweise Einheiten der Struktur

$-O-CH_2-CH(CH_3)-CH_2-CH_2-CH_2-O-$oder
$-O-CH_2-CH(C_2H_5)-CH_2-CH_2-O-$oder
$-OC-CH(CH_3)-CH_2-CH_2-CO-$oder
$-OC-CH(C_2H_5)-CH_2-CO-$oder

Einheiten mit den Strukturen

$-O-CH_2-CH(CH_3)-CH_2-CH_2-CH_2-O-$und
$-O-CH_2-CH(C_2H_5)-CH_2-CH_2-O-$oder

$-OC-CH(CH_3)-CH_2-CH_2-CO-$und
$-OC-CH(C_2H_5)-CH_2-CO-$

sowie Einheiten mit den Strukturen

$-OC-CH(CH_3)-CH_2-CH_2-CO-$und
$-OCH_2-CH(CH_3)-CH_2-CH_2-CH_2-O-$und/oder
$-OCH_2-CH(C_2H_5)-CH_2-CH_2-O$ oder

$-OC-CH(C_2H_5)-CH_2-CO-$und
$-O-CH_2-CH(CH_3)-CH_2-CH_2-CH_2-O-$und/oder
$-O-CH_2-CH(C_2H_5)-CH_2-CH_2-O-$,

wobei sie zu mindestens 10 Gew.-%, vorzugsweise mindestens 30 Gew.-%, bezogen auf das Gesamtgewicht aus mindestens einer der genannten Strukturen bestehen.

Die erfindungsgemäßen Polyester-polyole können hergestellt werden durch Umesterung in Gegenwart oder Abwesenheit von Katalysatoren von aliphatischen und/oder aromatischen Dicarbonsäuredialkylestern mit 1 bis 4 Kohlenstoffatomen, vorzugsweise 1 bis 2 Kohlenstoffatomen im Alkylrest, vorzugsweise Dicarbonsäurediethylestern oder insbesondere Dicarbonsäuredimethylestern mit 2-Methylpentandiol, 2-Ethylbutandiol, Mischungen aus 2-Methylpentandiol und 2-Ethylbutandiol im Gewichtsverhältnis 1:99 bis 99:1, vorzugsweise 85:15 bis 40:60 oder Mischungen aus 2-Methylpentandiol-1,5 und/oder 2-Ethylbutandiol-1,4 und mindestens einem linearen oder verzweigten, gegebenenfalls Etherbrücken aufweisenden aliphatischen 2-bis 4-wertigen Alkohol mit einem Gehalt an 2-Methylpentandiol-1,5 und/oder 2-Ethylbutandiol-1,4 von mindestens 20 Gew.-%, vorzugsweise von 40 bis ungefähr 100 Gew.-%, bezogen auf das Gewicht der Alkoholmischung oder von 2-Methylglutarsäuredialkylestern, 2-Ethylbernsteinsäuredialkylestern oder Mischungen aus 2-Methylglutarsäuredialkylestern und 2-Ethylbernsteinsäuredialkylestern mit 1 bis 4 Kohlenstoffatomen, vorzugsweise 1 bis 2 Kohlenstoffatomen im Alkylrest, vorzugsweise 2-Methylglutarsäure-und/oder 2-Ethylbernsteinsäurediethylestern und insbesondere 2-Methylglutarsäure-und/oder 2-Ethylbernsteinsäuredimethylestern mit 2-Methylpentandiol-1,5, 2-Ethylbutandiol-1,4, linearen oder verzweigten, gegebenenfalls Etherbrücken aufweisenden 2-bis 4-wertigen Alkoholen oder Mischungen aus mindestens zwei der mehrwertigen aliphatischen Alkohole.

Vorzugsweise hergestellt werden die erfindungsgemäßen Polyester-polyole jedoch durch Polykondensation in Gegenwart von Verdünnungsmitteln oder insbesondere in der Schmelze sowie in Gegenwart oder Abwesenheit von Katalysatoren von Polycarbonsäuren und/oder Polycarbonsäurederivaten, wie z.B. Dicarbonsäuremonoalkylestern, -dialkylestern mit 1 bis 4 Kohlenstoffatomen, vorzugsweise 1 bis 2 Kohlenstoffatomen im Alkylrest, wie z.B. Dicarbonsäuremono-und/oder -dimethylestern oder/und -mono-und/oder -diethylestern, und -anhydriden aus der Gruppe der 2-Methylglutarsäure, 2-Ethylbernsteinsäure, aliphatischen Dicarbonsäuren mit 2 bis 12 Kohlenstoffatomen, vorzugsweise 4 bis 6 Kohlenstoffatomen, cycloaliphatischen Dicarbonsäuren mit 6 bis 20 Kohlenstoffatomen, vorzugsweise 8 bis 12 Kohlenstoffatomen, aromatischen Dicarbonsäuren mit 8 bis 20 Kohlenstoffatomen, vorzugsweise 8 Kohlenstoffatomen oder Mischungen aus mindestens zwei der genannten Dicarbonsäuren und/oder -derivate und mehrwertigen aliphatischen Alkohole aus der Gruppe 2-Methylpentandiol-1,5, 2-Ethylbutandiol-1,4, der linearen oder verzweigten, gegebenenfalls Etherbrücken aufweisenden 2-bis 4-wertigen aliphatischen Alkohole oder Mischungen aus mindestens zwei der mehrwertigen aliphatischen Alkohole mit der Maßgabe, daß die eingesetzten Ausgangsstoffe mindestens eine Verbindung aus der Gruppe 2-Methylpentandiol-1,5, 2-Ethylbutandiol-1,4, 2-Methylglutarsäure, 2-Ethylbernsteinsäure oder der entsprechenden Dicarbonsäurederivate enthalten.

Neben 2-Methylglutarsäure, -mono-, -dialkylester, z.B. -dimethylester, 2-Ethylbernsteinsäure, -mono-, -dialkylester, z.B. -dimethylester seien als organische Polycarbonsäuren und -derivate beispielhaft genannt: aliphatische Dicarbonsäuren, wie z.B. Dodecandi-, Undecandi-, Sebacin-, Azelain-, Kork-, Pimelin-, Adipin-, Glutar-, Bernstein-, Malon-und Oxalsäure, sowie deren Mono-und/oder Dimethyl-, -ethyl-, -n-propyl-, -isopropyl-und -butylester, cycloaliphatische Dicarbonsäuren, wie z.B. Hexahydrophthalsäure, -anhydrid, -dimethylester, Hexahydroterephthalsäure, -dimethylester und Hexahydroisophthalsäure und aromatische Dicarbonsäuren, wie z.B. Phthalsäure, -monomethylester, -diethylester, -anhydrid, Terephthalsäure, -mono-und -dimethyl-bzw. -ethylester und Isophthalsäure. Die organischen Polycarbonsäuren und/oder -derivate können einzeln oder als Gemische eingesetzt werden. Vorzugsweise Anwendung finden Phthalsäure, -anhydrid, Phthalsäuremono-und -dimethylester, Mischungen aus Bernstein-, Glutar-und Adipinsäure, vorteilhafterweise im Gewichtsverhältnis von 20 bis 35:35 bis 50:20 bis 32 Teilen und insbesondere Adipinsäure.

Sofern zur Herstellung der erfindungsgemäßen Polyester-polyole als Polycarbonsäuren nicht ausschließlich 2-Methylglutarsäure, 2-Ethylbernsteinsäure und/oder deren Derivate verwendet werden, bestehen die Mischungen aus Polycarbonsäuren und/oder deren Derivate aus 20 bis ungefähr 100 Gew.-%, vorzugsweise 40 bis ungefähr 100 Gew.-% 2-Methylglutarsäure, 2-Ethylbernsteinsäure und/oder den entsprechenden Dialkylestern, vorzugsweise Dimethylestern und 80 bis ungefähr 0 Gew.-%, vorzugsweise 60 bis ungefähr 0 Gew.-% einer aliphatischen, cycloaliphatischen und/oder aromatischen Dicarbonsäure und/oder den entsprechenden Dicarbonsäuremonoalkylestern, -dialkylestern mit 1 bis 4 Kohlenstoffatomen im Alkylrest-oder Dicarbonsäureanhydriden, vorzugsweise Bernstein-, Glutar-, Adipinsäure, Phthalsäure oder einer Mischung aus mindestens zwei der genannten Dicarbonsäuren sowie den entsprechenden Dicarbonsäuremonoalkylestern, -dialkylestern und/oder -anhydriden, wobei die Gew.-% bezogen sind auf das Gesamtgewicht der Mischung.

Neben 2-Methylpentandiol-1,5, 2-Ethylbutandiol-1,4 oder Mischungen aus 2-Methylpentandiol-1,5 und 2-Ethylbutandiol-1,4 im Gewichtsverhältnis 1:99 bis 99:1, vorzugsweise 85:15 bis 40:60 finden als aliphatische 2-bis 4-wertige, vorzugsweise 3-wertige und insbesondere 2-wertige Alkohole Verwendung:

Verzweigte und/oder vorzugsweise lineare Alkandiole mit 2 bis 12 Kohlenstoffatomen, vorzugsweise 2 bis 6 Kohlenstoffatomen im Alkylenrest, Polyoxyalkylen-diole, vorteilhafterweise solche auf der Grundlage von 1,2-Propylenoxid und/oder Ethylenoxid, mit einem Molekulargewicht von 106 bis 622, vorzugsweise von 106 bis 262, lineare oder verzweigte Alkantriole mit 3 bis 6 Kohlenstoffatomen und/oder Pentaerythrit. Beispielhaft genannt seien Alkandiole, wie z.B. 2,2-Dimethyl-propandiol-1,3, 2,2,4-Trimethyl-hexandiol-1,6, 1,3-Butandiol, Ethandiol, 1,2-bzw. 1,3-Propandiol, 1,4-Butandiol, 1,5-Pentandiol, 1,6-Hexandiol, 1,8-Octandiol, 1,10-Decandiol und 1,12-Dodecandiol, Polyoxyalkylen-diole, wie z.B. Diethylen-glykol, Trioxyethylen-glykol, Tetraoxyethylen-glykol und höhermolekulare Polyoxyethylen-glykole, Dipropylen-glykol, Trioxypropylen-glykol, Tetraoxypropylen-glykol und höhermolekulare Polyoxypropylen-glykole sowie Polyoxypropylenpolyoxyethylen-glykole und Alkantriole, wie z.B. Trimethylol-ethan, Trimethylol-propan und Glycerin. Die mehrwertigen aliphatischen, gegebenenfalls Ethergruppen enthaltende Alkohole können einzeln oder in Form von Mischungen eingesetzt werden. Vorzugsweise Anwendung finden: Ethandiol, 1,2-bzw. 1,3-Propandiol, 1,4-Butandiol, 1,5-Pentandiol, 1,6-Hexandiol, Diethylen-glykol, Dipropylen-glykol, Glycerin, Trimethylolpropan oder eine Mischung aus mindestens zwei der mehrwertigen aliphatischen Alkohole.

Sofern zur Herstellung der erfindungsgemäßen Polyester-polyole als mehrwertiger Alkohol nicht ausschließlich 2-Methylpentandiol-1,5 und/oder 2-Ethylbutandiol-1,4 verwendet werden, bestehen die Alkoholmischungen aus 20 bis ungefähr 100 Gew.-%, vorzugsweise 40 bis 80 Gew.-% 2-Methylpentandiol-1,5 und/oder 2-Ethylbutandiol-1,4 und 80 bis ungefähr O Gew.-%, vorzugsweise 20 bis 60 Gew.-% mindestens eines linearen oder verzweigten Alkandiols mit 2 bis 12 Kohlenstoffatomen, eines Polyoxialkylen-diols mit einem Molekulargewicht von 106 bis 622, eines linearen oder verzweigten Alkantriols mit 3 bis 6 Kohlenstoffatomen und/oder Pentaerythrit, vorzugsweise Ethandiol, 1,2-bzw. 1,3-Propandiol, 1,4-Butandiol,1,5-Pentandiol, 1,6-Hexandiol, Diethylen-glykol, Dipropylen-glykol, Glycerin, Trimethylolpropan oder einer Mischung aus mindestens zwei der mehrwertigen aliphatischen Alkohole, wobei die Gew.-% bezogen sind auf das Gesamtgewicht der Alkoholmischung.

Wie bereits dargelegt wurde, können die organischen Polycarbonsäuren und/oder -derivate und mehrwertigen Alkohole katalysatorfrei oder in Gegenwart von Veresterungs-oder Umesterungskatalysatoren polykondensiert werden. Als Veresterungskatalysatoren kommen beispielsweise Eisen-, Cadmium-, Kobalt-, Blei-, Zink-, Antimon-, Magnesium-, Titan-und Zinnkatalysatoren in Form von Metallen, Metalloxiden oder -salzen in Betracht. Vorzugsweise verwendet werden Zinnsalze, z.B. gemäß US 3 162 616, Zinndioctoat und/oder Tetrabutylorthotitanat. Als Umesterungskatalysatoren seien beispielhaft genannt: Zinkacetat, Antimonacetat und Tetrabutylorthotitanat.

Zur Herstellung der erfindungsgemäßen Polyester-polyole werden die organischen Polycarbonsäuredialkylester, vorzugsweise 2-Methylglutarsäuredimethylester und/oder 2-Ethylbernsteinsäuredimethylester, gegebenenfalls im Gemisch mit aliphatischen, cycloaliphatischen und/oder aromatischen Dicarbonsäurealkylestern und aliphatischen mehrwertigen Alkohole oder Mischungen aus 2-Methylpentandiol-1,5 und/oder 2-Ethylbutandiol-1,4 und aliphatischen mehrwertigen Alkoholen oder aliphatischen, cycloaliphatischen und/oder aromatischen Dicarbonsäurealkylester und 2-Methylpentandiol-1,5 und/oder 2-Ethylbutandiol-1,4 im Molverhältnis von 1:1,04 bis 1:2,5, vorzugsweise 1:1,05 bis 1,5 verdünnungsmittelfrei oder in Gegenwart von Verdünnungsmitteln sowie katalysatorfrei oder vorzugsweise unter Zusatz von Umesterungskatalysatoren bei Temperaturen von 150 bis 250°C, vorzugsweise von 180 bis 220°C umgeestert. Nach beendeter Umesterung, wozu üblicherweise Reaktionszeiten von 8 bis 20 Stunden erforderlich sind, werden die überschüssigen Alkohole und gegebenenfalls Verdünnungsmittel vorzugsweise unter vermindertem Druck abdestilliert.

Wie bereits ausgeführt wurde, werden die erfindungsgemäßen Polyester-polyole vorzugsweise durch Polykondensation unter azeotropen Bedingungen oder insbesondere in der Schmelze, katalysatorfrei oder vorzugsweise unter Zusatz von Veresterungskatalysatoren, in einer Atmosphäre aus Inertgasen, wie Stickstoff, Kohlenoxid, Helium, Argon u.a. bei Temperaturen von 80 bis 250°C, vorzugsweise 150°C bis 220°C und insbesondere 180 bis 220°C gegebenenfalls unter vermindertem Druck bis zur gewünschten Säurezahl, die vorzugsweise kleiner als 2 ist, hergestellt.

Als Verdünnungsmittel und/oder Wasserschleppmittel kommen beispielsweise Benzol, Toluol, Xylol, Chlorbenzol, Dichlorbenzol u.a. in Betracht. Die organischen Polycarbonsäuren und/oder -derivate und aliphatischen mehrwertigen Alkohole werden dabei in solchen Mengen eingesetzt, daß das Verhältnis von Carboxylgruppe und/oder Äquivalent reaktivem Carbonsäurederivatrest zu Hydroxylgruppe 1:1 bis 2,5, vorzugsweise 1:1,05 bis 1,8 beträgt. Nach einer bevorzugten Ausführungsform wird das Veresterungsgemisch bei den obengenannten Temperaturen bis zu einer Säurezahl von 80 bis 20, vorzugsweise 40 bis 30, unter Normaldruck und anschließend unter einem Druck von kleiner als 500 mbar, vorzugsweise von 50 bis 150 mbar, polykondensiert. Hierzu sind üblicherweise Polykondensationszeiten von 10 bis 30 Stunden, vorzugsweise von 15 bis 20 Stunden erforderlich.

Die erfindungsgemäßen Polyester-polyole finden, wie bereits dargelegt wurde, Verwendung zur Herstellung von kompakten oder zelligen Polyurethan-oder Polyurethan-Polyharnstoff-Kunststoffen, im folgenden abgekürzt PU-bzw. PU-PH-Kunststoffe genannt, vorzugsweise von kompakten oder zelligen PU-oder PU-PH-Elastomeren nach dem Polyisocyanat-polyadditionsverfahren.

Zur Herstellung der PU-oder PU-PH-Kunststoffe bzw. Elastomeren werden

a) organische Polyisocyanate mit

b) den erfindungsgemäßen Polyester-polyolen und

c) Kettenverlängerungsmitteln und/oder Vernetzern in Gegenwart von

d) Katalysatoren und gegebenenfalls

e) Treibmitteln,

f) Hilfsmitteln und/oder Zusatzstoffen nach den bekannten technischen Verfahren zur Reaktion gebracht.

Zu den hierfür verwendbaren Ausgangsstoffen (a), (c), (d) und gegebenenfalls (e) und (f) ist folgendes auszuführen:

Als organische Polyisocyanate (a) kommen aliphatische, cycloaliphatische, araliphatische und vorzugsweise aromatische Isocyanate in Frage. Im einzelnen seien beispielhaft genannt: Alkylendiisocyanate mit 4 bis 12 Kohlenstoffatomen im Alkylenrest, wie 1,12-Dodecan-diisocyanat, Tetramethylen-diisocyanat-1,4 und vorzugsweise Hexamethylen-diisocyanat-1,6; cycloaliphatische Diisocyanate, wie Cyclohexan-1,3-und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4-und 2,6-Hexahydrotoluylen-diisocyanat sowie die entsprechenden Isomerengemische, 4,4'-, 2,2'-und 2,4'-Dicyclohexylmethan-diisocyanat sowie die entsprechenden Isomerengemische und vorzugsweise aromatische Di-und Polyisocyanate, wie 4,4'-, 2,4'-und 2,2'-Diisocyanato-diphenylmethan und die entsprechenden Isomerengemische, 2,4-und 2,6-Diisocyanato-toluol und die entsprechenden Isomerengemische, Polyphenyl-polymethylen-polyisocyanate und vorzugsweise Gemische aus Diphenylmethan-diisocyanaten und Polyphenyl-polymethylen-polyisocyanaten (Roh-MDI). Die genannten Di-und Polyisocyanate können einzeln oder in Form von Mischungen eingesetzt werden.

Häufig werden auch sogenannte modifizierte mehrwertige Isocyanate, d.h. Produkte, die durch chemische Umsetzung obiger Di-und/oder Polyisocyanate erhalten werden, verwendet. Als modifizierte organische Di-und Polyisocyanate kommen beispielsweise in Betracht: Carbodiimidgruppen auf weisende Polyisocyanate gemäß DE-PS 10 92 007, Allophanatgruppen aufweisende Polyisocyanate, wie sie z.B. in der britischen Patentschrift 994 890, den ausgelegten Unterlagen des belgischen Patents 761 626 und der NL-OS

71 02 524 beschrieben werden, Isocyanuratgruppen aufweisende Polyisocyanate, wie sie z.B. in der DE-PS 10 22 789, 12 22 067 und 10 27 394 sowie den DE-OS 19 29 034 und 20 04 048 beschrieben werden, Urethangruppen aufweisende Polyisocyanate, wie sie z.B. in den ausgelegten Unterlagen des belgischen Patents 752 261 oder der US-PS 3 394 164 beschrieben werden, acylierte Harnstoffgruppen aufweisende Polyisocyanate z.B. gemäß DE-PS 12 30 778, Biuretgruppen aufweisende Polyisocyanate z.B. gemäß DE-PS 11 01 394 und GB-PS 889 050; durch Telomerisationsreaktion hergestellte Polyisocyanate z.B. entsprechend den ausgelegten Unterlagen des belgischen Patents 723 640, Estergruppen aufweisende Polyisocyanate, wie sie z.B. in der GB-PS 965 474 und 1 072 956, der US-PS 3 567 765 und der DE-PS 12 31 688 genannt werden.

Vorzugsweise kommen jedoch zur Anwendung: urethangruppenhaltige Polyisocyanate, beispielsweise mit niedermolekularen linearen oder verzweigten Alkandiolen, Dialkylen-glykolen oder Polyoxyalkylenglykolen mit Molekulargewichten bis 3000 auf Basis von Ethylenoxid, 1,2-Propylenoxid oder deren Gemischen modifiziertes 4,4'-und/oder 2,4'-Diphenylmethan-diisocyanat oder 2,4-und/oder 2,6-Toluylen-diisocyanat, Carbodiimidgruppen und/oder Isocyanuratringe enthaltende Polyisocyanate, z.B. auf 4,4'-, 2,4'-Diphenylmethan-diisocyanat-, 2,4-und/oder 2,6-Toluylen-diisocyanat-Basis und insbesondere 4,4'-Diphenylmethan-diisocyanat, Mischungen aus 2,4'-und 4,4'-Diphenylmethan-diisocyanat, Toluylen-diisocyanate, Mischungen aus Diphenylmethan-diisocyanaten und Polyphenyl-polymethylenpolyisocyanaten (Roh-MDI) und Gemischen aus Toluylen-diisocyanaten und Roh-MDI.

Als Kettenverlängerungsmittel und/oder Vernetzer (c) finden mindestens difunktionelle organische Verbindungen aus der Gruppe der

(ci) primären aromatischen Diamine, deren primäre Aminogruppen gegen über Polyisocyanaten durch mindestens einen orthoständigen Alkylsubstituenten zu jeder Aminogruppe sterisch behindert sind,

(cii) sekundären aromatischen Diamine und vorzugsweise

(ciii) mehrwertigen, vorzugsweise zweiwertigen Alkohole und/oder Polyoxyalkylen-polyole mit Molekulargewichten kleiner als 500, vorzugsweise von 62 bis 300,

Verwendung.

Als sterisch gehinderte primäre aromatische Diamine (ci) bewährt haben sich und daher vorzugsweise verwendet werden alkylsubstituierte meta-Phenylendiamine der Formeln

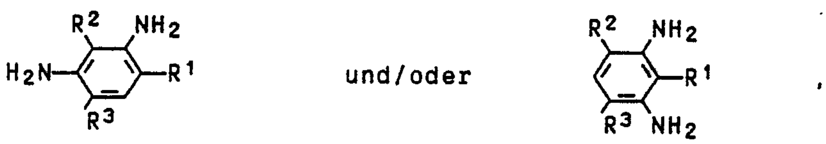

in denen $R^1$ ein Wasserstoffatom oder ein linearer oder verzweigter Alkylrest mit 1 bis 12 Kohlenstoffatomen, vorzugsweise 1 bis 6 Kohlenstoffatomen ist und $R^2$ und $R^3$ gleiche oder verschiedene, lineare oder verzweigte Alkylreste mit 1 bis 4 Kohlenstoffatomen, wie z.B. ein Methyl-, Ethyl-, Propyl-, Isopropyl-, Butyl- oder sek. Butylrest, sind.

Geeignet sind insbesondere solche Alkylreste $R^1$, bei denen die Verzweigungsstelle am $C_1$-Kohlenstoffatom sitzt. Neben Wasserstoff seien als Alkylreste $R^1$ beispielsweise genannt: der Methyl-, Ethyl-, n-und iso-Propyl-, Butyl-, Hexyl-, Octyl-, Decyl-, 1-Methyl-octyl-, 2-Ethyl-octyl-, 1-Methyl-hexyl-, 1,1-Dimethyl-pentyl-, 1,3,3-Trimethyl-hexyl-, 1-Ethyl-pentyl-, 2-Ethyl-pentyl-und vorzugsweise der Cyclohexyl-, 1-Methyl-n-propyl-, tert.-Butyl-, 1-Ethyl-n-propyl-, 1-Methyl-n-butyl-und 1,1-Dimethyl-n-propylrest.

Als alkylsubstituierte m-Phenylendiamine kommen beispielsweise in Betracht: 2,4-Dimethyl-, 2,4-Diethyl-, 2,4-Diisopropyl-, 2,4-Diethyl-6-methyl-, 2-Methyl-4,6-diethyl-, 2,4,6-Triethyl-, 2,4-Dimethyl-6-cyclohexyl-, 2-Cyclohexyl-4,6-diethyl-, 2-Cyclohexyl-2,6-diisopropyl-, 2,4-Dimethyl-6-(1-ethyl-n-propyl)-, 2,4-Dimethyl-6-(1,1-dimethyl-n-propyl)-und 2-(1-Methyl-n-butyl)-4,6-dimethyl-phenylendiamin-1,3.

Bewährt haben sich ferner alkylsubstituierte Diamino-diphenylmethane, wie z.B. 3,3'-di-und 3,3',5,5'-tetra-n-alkylsubstituierte 4,4'-Diamino-diphenylmethane, wie z.B. 3,3'-Diethyl-, 3,3',5,5'-Tetraethyl-und 3,3',5,5'-Tetra-n-propyl-4,4'-diamino-diphenylmethan.

Anwendung finden vorteilhafterweise Diamino-diphenylmethane der Formel

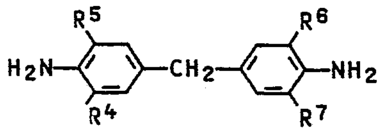 ,

in der $R^4$, $R^5$, $R^6$ und $R^7$ gleich oder verschieden sind und einen Methyl-, Ethyl-, Propyl-, Isopropyl-, sek.-Butyl-und tert.-Butylrest bedeuten, wobei jedoch mindestens einer der Reste ein Isopropyl-oder sek.-Butylrest sein muß. Die alkylsubstituierten 4,4'-Diamino-diphenylmethane können auch im Gemisch mit Isomeren der Formeln

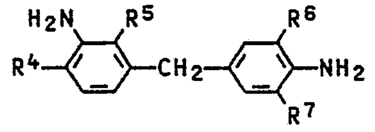 und/oder 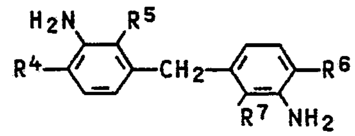

verwendet werden, wobei $R^4$, $R^5$, $R^6$ und $R^7$ die obengenannte Bedeutung haben.

Beispielhaft genannt seien: 3,3',5-Trimethyl-5'-isopropyl-, 3,3',5-Triethyl-5'-isopropyl-, 3,3',5-Trimethyl-5'-sek.-butyl-, 3,3',5-Triethyl-5'-sek.-butyl-4,4'-diamino-diphenylmethan, 3,3'-Dimethyl-5,5'-diisopropyl-, 3,3'-Diethyl-5,5'-diisopropyl-, 3,3'-Dimethyl-5,5'-di-sek.-butyl-, 3,3'-Diethyl-5,5'-di-sek.-butyl-, 3,5-Dimethyl-3',5'-diisopropyl-, 3,5-Diethyl-3',5'-diisopropyl-, 3,5-Dimethyl-3',5'-di-sek.-butyl-, 3,5-Diethyl-3',5'-di-sek.-butyl-4,4'-diamino-diphenylmethan, 3-Methyl-3',5,5'-triisopropyl-, 3-Ethyl-3',5,5'-triisopropyl-, 3-Methyl-3',5,5'-tri-sek.-butyl-, 3-Ethyl-3',5,5'-tri-sek.-butyl-4,4'-diamino-diphenylmethan, 3,3'-Diisopropyl-5,5'-di-sek.-butyl-, 3,5-Diisopropyl-3',5'-di-sek.-butyl-, 3-Ethyl-5-sek.-butyl-3',5'-diisopropyl-, 3-Methyl-5-tert.-butyl-3',5'-diisopropyl-, 3-Ethyl-5-sek.-butyl-3'-methyl-5'-tert.-butyl-, 3,3',5,5'-Tetraisopropyl-und 3,3',5,5'-Tetra-sek.-butyl-4,4'-diamino-diphenylmethan.

Vorzugsweise verwendet werden folgende primären aromatischen Diamine: 2,4-Diethyl-, 2,4-Dimethylphenylendiamin-1,3, 2,4-Diethyl-6-methyl-, 2-Methyl-4,6-diethyl-phenylendiamin-1,3, 2,4,6-Triethylphenylendiamin-1,3, 2,4-Dimethyl-6-tert.-butyl-, 2,4-Dimethyl-6-isooctyl-und 2,4-Dimethyl-6-cyclohexyl-phenylendiamin-1,3 sowie 3,5-Dimethyl-3',5'-diisopropyl-und 3,3',5,5'-Tetraisopropyl-4,4'-diamino-diphenylmethan.

Die primären aromatischen Diamine (ci) können einzeln oder in Form von Mischungen, beispielsweise aus alkylsubstituierten 1,3-Phenylendiaminen, 3,3'-di-und/oder 3,3',5,5'-tetraalkylsubstituierten 4,4'-Diaminodiphenylmethanen eingesetzt werden.

Als sekundäre aromatische Diamine (cii) seien beispielhaft genannt: N,N'-dialkylsubstituierte aromatische Diamine, die gegebenenfalls am aromatischen Kern durch Alkylreste substituiert sein können, mit 1 bis 20, vorzugsweise 1 bis 4 Kohlenstoffatomen im N-Alkylrest, wie z.B. N,N'-Diethyl-, N,N'-Di-sek.-pentyl-, N,N'-Di-sek.-hexyl-, N,N'-Di-sek.-decyl-, N,N'-Dicyclohexyl-p-bzw. -m-phenylendiamin, N,N'-Dimethyl-, N,N'-Diethyl-, N,N'-Diisopropyl-, N,N'-Di-sek.-butyl-, N,N'-Dicyclohexyl-4,4'-diamino-diphenylmethan und N,N'-Di-sek.-butyl-benzidin.

Als mehrwertige Alkohole und/oder Polyoxyalkylen-polyole (ciii) kommen beispielsweise in Betracht: aliphatische und/oder araliphatische Diole mit 2 bis 14, vorzugsweise 2 bis 6 Kohlenstoffatomen, wie Propandiol-1,3, Decandiol-1,10, Diethylenglykol, Dipropylenglykol, Bis-(2-hydroxyethyl)-hydrochinon und vorzugsweise Ethylenglykol, Butandiol-1,4 und Hexandiol-1,6, Triole, wie Glycerin und Trimethylolpropan, und niedermolekulare Polyoxyalkylen-polyole auf Basis Ethylen-und/oder 1,2-Propylenoxid und den vorgenannten Startermolekülen.

Die Kettenverlängerungsmittel und/oder Vernetzer (c) können einzeln oder in Form von Mischungen zugesetzt werden und kommen beispielsweise in Mengen von 5 bis 50 Gew.-Teilen, vorzugsweise 10 bis 40 Gew.-Teilen und insbesondere 15 bis 30 Gew.-Teilen, bezogen auf 100 Gew.-Teile der Polyester-polyole (b), zur Anwendung. Sofern Mischungen aus sterisch gehinderten primären aromatischen Diaminen (ci) und sek. aromatischen Diaminen (cii) und/oder mehrwertigen Alkoholen (ciii) eingesetzt werden, enthalten diese vorteilhafterweise pro 100 Gew.-Teilen der Komponente (ci) 1 bis 40, vorzugsweise 5 bis 20 Gew.-Teile der Komponenten (cii) und/oder (ciii). Als Kettenverlängerungsmittel verwendet werden insbesondere niedermolekulare Diole (ciii) und/oder aromatische Diamine (ci), die in ortho-Stellung zu den Aminogruppen mindestens einen Alkylrest gebunden enthalten.

Als Katalysatoren (d) werden zweckmäßigerweise Verbindungen verwendet, die die Reaktion der Polyester-polyole (b) und gegebenenfalls Hydroxylgruppen enthaltenden Verbindungen der Komponenten (ciii) mit den Polyisocyanaten stark beschleunigen. In Betracht kommen organische Metallverbindungen,

vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinn-dilaurat, Dibutylzinn-maleat und Dioctylzinndiacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethyl-ethylendiamin, N,N,N',N'-Tetramethyl-butandiamin. Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolverbindungen, wie Triethanolamin, Triisopropanolamin, N-Methyl-und N-Ethyl-diethanolamin und Dimethylethanolamin.

Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-% Katalysator bzw. Katalysatorkombination, bezogen auf das Gewicht der Komponente (b).

Zu Treibmitteln (e), welche zur Herstellung der zelligen Kunststoffe bzw. Formkörper verwendet werden können, gehört Wasser, das mit Isocyanatgruppen unter Bildung von Kohlendioxid reagiert. Die Wassermengen, die zweckmäßigerweise verwendet werden können, betragen 0,1 bis 2 Gew.-%, vorzugsweise 0,5 bis 1,5 Gew.-% bezogen auf das Gewicht der Komponente (b).

Andere verwendbare Treibmittel sind niedrigsiedende Flüssigkeiten, die unter dem Einfluß der exothermen Polyadditionsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluorethan und 1,1,2-Trichlor-1,2,2-trifluorethan.

Auch Gemische dieser niedrigsiedenden Flüssigkeit untereinander und/oder mit anderen substituierten oder unsubstituierten Kohlenwasserstoffen können verwendet werden.

Die zweckmäßigste Menge an niedrigsiedender Flüssigkeit zur Herstellung von zellhaltigen PU-oder PU-PH-Formkörpern hängt ab von der Dichte, die man erreichen will sowie gegebenenfalls von der Mitverwendung von Wasser. Im allgemeinen liefern Mengen von 0,5 bis 15 Gew.-Teilen, bezogen auf 100 Gew.-Teilen der Komponente (b) zufriedenstellende Ergebnisse.

Der Reaktionsmischung können gegebenenfalls auch noch Hilfsmittel und/oder Zusatzstoffe (f) einverleibt werden. Genannt seien beispielsweise oberflächenaktive Substanzen, innere Formtrennmittel, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin oder stearinsaures Diethanolamin, Salze von Sulfonsäuren, z.B. Alkali-oder Ammoniumsalze von Dodecylbenzol-oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl-bzw. Ricinussäureester und Türkischrotöl und Zellregler, wie Paraffine, Fettalkohole und Dimethylpolysiloxane. Die oberflächenaktiven Substanzen werden üblicherweise in Mengen von 0,01 bis 5 Gewichtsteilen, bezogen auf 100 Gewichtsteile der Komponente (b), angewandt.

Als innere Formtrennmittel eignen sich beispielsweise Carbonsäureester und/oder Carbonsäureamide, die hergestellt werden durch Veresterung oder Amidierung einer Mischung aus Montansäure und mindestens einer aliphatischen Carbonsäure mit mindestens 10 Kohlenstoffatomen mit mindestens difunktionellen Alkanolaminen, Polyolen und/oder Polyaminen mit Molekulargewichten von 60 bis 400.

Als Füllstoffe, insbesondere verstärkend wirkende Füllstoffe sind die an sich bekannten üblichen organischen und anorganischen Füllstoffe, Verstärkungsmittel, Beschwerungsmittel, Mittel zur Verbesserung des Abriebverhaltens in Anstrichfarben, Beschichtungsmitteln usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze, wie Kreide, Schwerspat und anorganische Pigmente, wie Cadmiumsulfid, Zinksulfid sowie Glas, Asbestmehl u.a.. Vorzugsweise verwendet werden Kaolin (China Clay), Aluminiumsilikat und Copräzipitate aus Bariumsulfat und Aluminiumsilikat sowie natürliche und synthetische faserförmige

Mineralien, wie Asbest, Wollastonit und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate auf Styrol-Acrylnitrilbasis, die durch in situ Polymerisation von Acrylnitril-Styrol-Mischungen in Polyetherolen analog den Angaben der deutschen Patentschriften 11 11 394, 12 22 669 (US 3 304 273, 3 383 351, 3 523 093), 11 52 536 (GB 1 040 452) und 11 52 537 (GB 987 618) hergestellt werden sowie Filler-polyoxyalkylen-polyole, bei denen wäßrige Polymerdispersionen in Polyoxyalkylen-polyoldispersionen übergeführt werden.

Die anorganischen und organischen Füllstoffe werden der Reaktionsmischung vorteilhafterweise in Mengen von 0,5 bis 50 Gew.-%, vorzugsweise 1 bis 40 Gew.-%, bezogen auf das Gewicht der Komponente (a) bis (c), einverleibt.

Geeignete Flammschutzmittel sind beispielsweise Trikresylphosphat, Tris-2-chlorethylphosphat, Trischlorpropylphosphat und Tris-2,3-dibrompropylphosphat.

Außer den bereits genannten halogensubstituierten Phosphaten können auch anorganische Flammschutzmittel, wie Aluminiumoxidhydrat, Antimontrioxid, Arsenoxid, Ammoniumpolyphosphat und Calciumsulfat zum Flammfestmachen der Kunststoffe bzw. Formkörper verwendet werden. Im allgemeinen hat es sich als zweckmäßig erwiesen, 5 bis 50 Gew.-Teile, vorzugsweise 5 bis 25 Gew.-Teile der genannten Flammschutzmittel für jeweils 100 Gew.-Teile der Komponente (b) zu verwenden.

Nähere Angaben über die obengenannten anderen üblichen Hilfs-und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, zu entnehmen.

Zur Herstellung der gegebenenfalls zelligen PU-oder PU-PH-Formkörper werden die organischen Polyisocyanate (a), Polyester-polyole (b) und Kettenverlängerungsmittel und/oder Vernetzer (c) in solchen Mengen zur Umsetzung gebracht, daß das Äquivalenz-Verhältnis von NCO-Gruppen der Polyisocyanate (a) zur Summe der reaktiven Wasserstoffatome der Komponenten (b) und (c) 1:0,85 bis 1,25, vorzugsweise 1:0,95 bis 1,15, beträgt.

Die Herstellung der kompakten und vorzugsweise zellhaltigen Formkörper erfolgt nach dem Prepolymer-Verfahren oder vorzugsweise nach dem one shot-Verfahren, wobei PU-Formkörper zweckmäßigerweise mit Hilfe der Niederdrucktechnik oder des Gießverfahrens und PU-PH-Formkörper mit Hilfe der Reaktionsspritzguß-Technik hergestellt werden.

Diese Verfahrenstechniken werden z.B. beschrieben von Piechota und Röhr in "Integralschaumstoff", Carl-Hanser-Verlag, München, Wien 1975; D.J. Prepelka und J.L. Wharton in Journal of Cellular Plastics, März/April 1975, Seiten 87 bis 98 und U. Knipp in Journal of Cellular Plastics, März/April 1973, Seiten 76 bis 84.

Bei Verwendung einer Mischkammer mit mehreren Zulaufdüsen können die Ausgangskomponenten einzeln zugeführt und in der Mischkammer intensiv vermischt werden. Als besonders vorteilhaft hat es sich erwiesen, nach dem Zweikomponenten-Verfahren zu arbeiten und die Kettenverlängerungsmittel und/oder Vernetzer (c) und Katalysatoren (d) in den Polyester-polyolen (b) zu lösen und gegebenenfalls mit Treibmittel (e), Hilfsmitteln und/oder Zusatzstoffen (f) in der Komponente (A) zu vereinigen und als Komponente (B) die organischen, gegebenenfalls modifizierten Polyisocyanate zu verwenden. Vorteilhaft ist hierbei beispielsweise, daß die Komponenten (A) und (B) getrennt gelagert und raumsparend transportiert werden können und bei der Verarbeitung nur noch in den entsprechenden Mengen gemischt werden müssen.

Zur Herstellung von Formkörpern wird die Menge des in das Formwerkzeug eingebrachten Reaktionsgemisches so bemessen, daß die erhaltenen kompakten Formkörper eine Dichte von 1,0 bis 1,4 $g/cm^3$, vorzugsweise von 1,0 bis 1,2 $g/cm^3$, und die zellhaltigen Formkörper eine Dichte von 0,2 bis 1,1 $g/cm^3$ aufweisen, wobei die mikrozellularen Formkörper vorzugsweise eine Dichte von 0,8 bis 1,0 $g/cm^3$, Schuhsohlen vorzugsweise eine Dichte von 0,4 bis 0,65 $g/cm^3$ und Schaumstoffe vorzugsweise eine Dichte von 0,25 bis 0,4 $g/cm^3$ besitzen. Die Ausgangskomponenten werden mit einer Temperatur von 15 bis 80°C, vorzugsweise 20 bis 60°C und insbesondere 25 bis 55°C, in das Formwerkzeug eingebracht. Die Formwerkzeugtemperatur beträgt zweckmäßigerweise 20 bis 100°C, vorzugsweise 30 bis 80°C. Die Verdichtungsgrade zur Herstellung der mikrozellularen oder zellhaltigen Formkörper liegen zwischen 1,1 und 8, vorzugsweise zwischen 2 und 8.

Die nach dem erfindungsgemäßen Verfahren erhaltenen kompakten bzw. zelligen PU-bzw. PU-PH-Formkörper eignen sich insbesondere zur Verwendung in der Automobilindustrie, beispielsweise als Stoßstangenabdeckungen, Rammschutzleisten und Karosserieteile wie Regenrinnen, Kotflügel, Spoiler und Radkästenverbreiterungen sowie als technische Gehäuseteile, Laufrollen und Schuhsohlen. Die Schaumstoffe finden beispielsweise als Armlehnen, Kopfstützen, Sicherheitsabdeckungen im Automobilinnenraum sowie als Motorrad-und Fahrradsättel und Deckschichten in Verbundschaumstoffen Anwendung.

Die in den Beispielen genannten Teile beziehen sich auf das Gewicht.

Herstellung der Polyester-polyole durch Polykondensation von Polycarbonsäuren und Diolen

Beispiele 1 bis 9 und Vergleichsbeispiele A bis E

Allgemeine Herstellungsvorschrift.

Die in Tabelle 1 genannten aliphatischen Dicarbonsäuren und aliphatischen Diole wurden in den genannten Mengen bei Raumtemperatur unter Rühren gemischt und unter Normaldruck und Abdestillieren des Kondensationswassers bei Temperaturen bis 220°C in einer Stickstoffatmosphäre bis zum Erreichen einer Säurezahl von ungefähr 20 verestert. Anschließend wurde die Polykondensation unter Druckerniedrigung bis ca. 50 mbar zu Ende geführt, sowie gegebenenfalls das überschüssige Diol abdestilliert.

Die erhaltenen Polyester-polyole besaßen die in Tabelle 1 genannten Kennzahlen.

1) Das Dicarbonsäuregemisch in Tabelle 1 besteht aus 25 Gew.-Teilen Bernsteinsäure, 50 Gew.-Teilen Glutarsäure und 25 Gew.-Teilen Adipinsäure.

Tabelle 1

| Beispiel / Vergleichsbeispiel | | 1 | 2 | 3 | 4 | 5 | 6 | A | B |
|---|---|---|---|---|---|---|---|---|---|
| Aufbaukomponenten: | | | | | | | | | |
| Adipinsäure | [Gew.-Teile] | 59,9 | 60,2 | 75,5 | 67,1 | 65,5 | 60,2 | 73,5 | 69,3 |
| 2-Methylglutarsäure | [Gew.-Teile] | - | - | - | - | - | - | - | - |
| 2-Ethylbernsteinsäure | [Gew.-Teile] | - | - | - | - | - | - | - | - |
| Dicarbonsäuregemisch [1] | [Gew.-Teile] | - | - | - | - | - | - | - | - |
| 2-Methylpentandiol-1,5 | [Gew.-Teile] | 46,6 | 54,6 | - | - | - | - | - | - |
| 2-Ethylbutandiol-1,4 | [Gew.-Teile] | 8,2 | - | 22,3 | 30,1 | 13,7 | 54,6 | - | - |
| Ethandiol-1,2 | [Gew.-Teile] | - | - | 23,4 | - | - | - | 11,4 | - |
| Butandiol-1,4 | [Gew.-Teile] | - | - | - | 22,9 | 26,9 | - | 33,2 | 47,4 |
| Triisopropanolamin | [Gew.-Teile] | - | - | - | - | - | - | - | - |
| Kennzahlen: | | | | | | | | | |
| Hydroxylzahl [mg KOH/g] | | 57,1 | 57,6 | 56,4 | 55,6 | 58,8 | 56,7 | 56,5 | 58,7 |
| Säurezahl [mg KOH/g] | | 0,9 | 0,7 | 0,7 | 0,7 | 0,7 | 0,7 | 0,5 | 0,6 |
| Viskosität bei 25°C [m.Pa.s] | | 7300 | 7400 | 9050 | 8500 | 8000 | 6700 | - | - |
| Jodfarbzahl | | 1 | 1 | 1-2 | 1-2 | 1 | 1 | 2 | 2-3 |
| Aggregatzustand bei 25°C | | flüssig | flüssig | flüssig | flüssig | flüssig | flüssig | fest | fest |

Tabelle 1 -Fortsetzung-

| Beispiel | | 7 | 8 | 9 | | | |
|---|---|---|---|---|---|---|---|
| Vergleichsbeispiel | | | | | C | D | E |
| Aufbaukomponenten: | | | | | | | |
| Adipinsäure | [Gew.-Teile] | - | - | - | - | 32,88 | - |
| 2-Methylglutarsäure | [Gew.-Teile] | 34,30 | 19,8 | 28,01 | - | - | - |
| 2-Ethylbernsteinsäure | [Gew.-Teile] | - | 4,95 | 4,95 | - | - | - |
| Dicarbonsäuregemisch 1) | [Gew.-Teile] | - | - | - | 22,69 | - | 58,21 |
| 2-Methylpentandiol-1,5 | [Gew.-Teile] | - | - | - | - | - | - |
| 2-Ethylbutandiol-1,4 | [Gew.-Teile] | - | - | - | - | - | - |
| Ethandiol-1,2 | [Gew.-Teile] | 13,30 | 11,18 | 14,98 | 11,5 | 15,20 | 30,74 |
| Butandiol-1,4 | [Gew.-Teile] | - | - | - | - | - | - |
| Triisopropanolamin | [Gew.-Teile] | - | 12,5 | - | - | - | 29,2 |
| Kennzahlen: | | | | | | | |
| Hydroxylzahl [mg KOH/g] | | 40,2 | 300 | 61,2 | 61,7 | 60,1 | 300 |
| Säurezahl [mg KOH/g] | | 0,2 | 1,1 | 0,2 | 0,5 | 0,7 | 1,2 |
| Viskosität bei 25°C [m.Pa.s] | | 10300 | 2850 | 7890 | 21330 | - | 3900 |
| Jodfarbzahl | | 3-4 | 3-4 | 3-4 | 80 | 1-2 | 80 |
| Aggregatzustand bei 25°C | | flüssig | flüssig | flüssig | flüssig | fest | flüssig |

Herstellung der Polyester-polyole durch Umesterung

Beispiele 10 bis 12

Die in Tabelle 2 genannten aliphatischen Dicarbonsäuredimethylester und aliphatischen Diole wurden in den genannten Mengen bei Raumtemperatur unter Rühren gemischt und unter Normaldruck und Abdestillieren des Methanols bei 190°C in einem Stickstoffstrom umgeestert. Anschließend wurde die Polykondensation unter Druckerniedrigung bis ca. 50 mbar zu Ende geführt und das überschüssige Diol abdestilliert.

Die erhaltenen Polyester-polyole besaßen die in Tabelle 2 genannten Kennzahlen.

Tabelle 2

| Beispiel | | 10 | 11 | 12 |
|---|---|---|---|---|
| Aufbaukomponenten: | | | | |
| 2-Methylglutarsäuredimethylester | [Gew.-Teile] | 26,41 | 29,04 | 18,47 |
| 2-Ethylbernsteinsäuredimethylester | [Gew.-Teile] | 4,66 | 5,12 | 3,26 |
| Ethandiol-1,2 | [Gew.-Teile] | 12,12 | 14,83 | 8,49 |
| Triisopropanolamin | [Gew.-Teile] | - | - | 9,22 |
| Kennzahlen: | | | | |
| Hydroxylzahl [mg KOH/g] | | 62,8 | 122,4 | 302 |
| Säurezahl [mg KOH/g] | | 0,4 | 0,1 | 0,8 |
| Viskosität bei $25^{0}C$ [m.Pa.s] | | 7150 | 1102 | 2605 |
| Jodfarbzahl | | 3-4 | 3-4 | 3-4 |

Bestimmung der Hydrolysebeständigkeit der Polyester-polyole

Die Polyester-polyole wurden mit 2 Gew.-% Wasser gemischt und bei 65°C gelagert. Der Anstieg der Säurezahl mit der Lagerzeit stellt ein Maß für die Hydrolysebeständigkeit der Polyester-polyole dar.

| Polyester-polyol hergestellt gemäß Beispiel/Vergl.-Beispiel | Säurezahl [mg KOH/g] | Säurezahl nach 100 Tagen [mg KOH/g] |
|---|---|---|
| 7 | 0,2 | 0,2 |
| 10 | 0,4 | 0,4 |
| C | 0,5 | 5,4 |
| D | 0,7 | 1,5 |

Beispiele 13 bis 18 und Vergleichsbeispiel F

Polyurethanformulierung zur Herstellung von zelligen Polyurethan-Elastomeren für Schuhsohlen

A-Komponente: Mischung aus
82,83 Gew.-Teilen Polyester-polyol, hergestellt gemäß Beispiele 1 bis 6 oder Vergleichsbeispiele A,
8,95 Gew.-Teilen Ethylenglykol,
1,0 Gew.-Teilen einer 33 gew.-%igen Lösung von Triethylendiamin in Ethylenglykol,
3,9 Gew.-Teilen eines Antistatikums
0,16 Gew.-Teilen Silikonöl (DC 193 der Dow Corning)
1,5 Gew.-Teilen Farbpaste,
1,8 Gew.-Teilen 1,1,2-Trichlor-2,2,1-trifluorethan und
0,28 Gew.-Teilen Wasser

B-Komponente:

NCO-Gruppen enthaltendes Prepolymeres mit einem NCO-Gehalt von 18,7 Gew.-%, hergestellt durch Umsetzung von 65 Gew.-Teilen 1,4-Butandiol-Ethylenglykol-polyadipat (OH-Zahl 56) mit 100 Gew.-Teilen 4,4'-Diphenylmethan-diisocyanat.

100 Gew.-Teile der A-Komponente und 93 Gew.-Teile der B-Komponente - entsprechend einem NCO-Index von 100 - wurden mit Hilfe einer Niederdruck-Dosiermaschine vom Typ F20 der Elastogran Maschinenbau GmbH, Straßlach, bei 40°C gemischt.

250 g der erhaltenen Reaktionsmischung wurden in ein auf 45°C temperiertes Metallformwerkzeug mit den Abmessungen 200×200×10 mm eingetragen und in dem geschlossenen Formwerkzeug aushärten gelassen. Die Formstandzeit betrug 10 sek.

Die verwendeten Polyester-polyole und die an den erhaltenen Prüfkörpern gemessenen mechanischen Eigenschaften sind in Tabelle 3 zusammengefaßt:

Tabelle 3

| | | 13 | 14 | 15 | 16 | 17 | 18 | |
|---|---|---|---|---|---|---|---|---|
| Beispiel | | 13 | 14 | 15 | 16 | 17 | 18 | |
| Vergleichsbeispiel | | | | | | | | F |
| Polyester-polyol nach Beispiel | | 1 | 2 | 3 | 4 | 5 | 6 | - |
| Polyester-polyol nach Vergleichsbeispiel | | - | - | - | - | - | - | A |
| mechanische Eigenschaften: | | | | | | | | |
| Dichte | [g/cm³] | 0,6 | 0,6 | 0,6 | 0,6 | 0,6 | 0,6 | 0,6 |
| Shore-A-Härte nach DIN 53 505 | | 65 | 65 | 68 | 77 | 68 | 71 | 75 |
| Reißfestigkeit nach DIN 53 504 | [N/mm²] | 7,9 | 10,2 | 9,3 | 9,5 | 10,3 | 9,4 | 8,2 |
| Reißdehnung nach DIN 53 504 | [%] | 430 | 440 | 425 | 411 | 454 | 403 | 380 |
| Weiterreißfestigkeit nach DIN 53 515 | [N/mm] | 13,7 | 12,3 | 9,5 | 12,7 | 11,3 | 10,7 | 8,8 |
| Dauerbiegeverhalten nach 30 000 Belastungszyklen | | | | | | | | |
| vor der Hydrolysealterung | | i.O.[1] | i.O. | i.O. | i.O. | i.O. | i.O. | i.O. |
| nach der Hydrolysealterung [7 Tage bei 70°C und 100 % relativer Luftfeuchtigkeit] | | i.O. | i.O. | i.O. | i.O. | i.O. | i.O. | Bruch |

1) in Ordnung

Beispiel 19

Polyurethanformulierung zur Herstellung eines zelligen Polyurethan-Elastomeren:

A-Komponente: Mischung aus
83,0 Gew.-Teilen eines Polyester-polyols, hergestellt nach den Angaben des Beispiels 10,
9,0 Gew.-Teilen Ethylenglykol,
1,0 Gew.-Teilen einer 33gew.-%igen Lösung von Triethylendiamin in Ethylenglykol,
3,7 Gew.-Teilen eines Antistatikums
0,2 Gew.-Teilen Silikonöl (DC 193 der Firma Dow Corning)
1,5 Gew.-Teilen Farbpaste,
0,3 Gew.-Teilen Wasser und
1,8 Gew.-Teilen 1,1,2-Trichlor-2,2,1-trifluorethan

B-Komponente: analog Beispiel 13

100 Gew.-Teile der A-Komponente und 93 Gew.-Teile der B-Komponente, entsprechend einem NCO-Index von 100, wurden analog den Angaben des Beispiels 13 zu einer Prüfplatte verarbeitet. Die Formstandzeit betrug 10 sek.

Die an dem Prüfkörper gemessenen mechanischen Eigenschaften sind in Tabelle 4 aufgelistet.

Vergleichsbeispiel G

Man verfuhr analog den Angaben des Beispiels 19, verwendete jedoch anstelle des Polyester-polyols nach Beispiel 10 das nach dem Vergleichsbeispiel C hergestellte Polyester-polyol.

Die an dem erhaltenen Prüfkörper gemessenen mechanischen Eigenschaften sind in Tabelle 4 zusammengefaßt.

## Ansprüche

1. Bei 25°C flüssige Polyester-polyole, die Einheiten mit der Struktur

$-O-CH_2-CH(CH_3)-CH_2-CH_2-CH_2-O-$,
$-O-CH_2-CH(C_2H_5)-CH_2-CH_2-O-$,
$-OC-CH(CH_3)-CH_2-CH_2-CO-$und/oder
$-OC-CH(C_2H_5)-CH_2-CO-$

gebunden enthalten.

2. Bei 25°C flüssige Polyester-polyole, die Einheiten mit der Struktur

$-O-CH_2-CH(CH_3)-CH_2-CH_2-CH_2-O-$und/oder,
$-O-CH_2-CH(C_2H_5)-CH_2-CH_2-O-$

gebunden enthalten.

3. Bei 25°C flüssige Polyester-polyole, die Einheiten mit der Struktur

$-OC-CH(CH_3)-CH_2-CH_2-CO-$und/oder
$-OC-CH(C_2H_5)-CH_2-CO-$

gebunden enthalten.

4. Bei 25°C flüssige Polyester-polyole, die Einheiten mit der Struktur

$-O-CH_2-CH(CH_3)-CH_2-CH_2-CH_2-O-$

gebunden enthalten.

5. Bei 25°C flüssige Polyester-polyole, die Einheiten mit der Struktur

$-O-CH_2-CH(C_2H_5)-CH_2CH_2-O-$

gebunden enthalten.

6. Bei 25°C flüssige Polyester-polyole, die Einheiten mit der Struktur

$-OC-CH(CH_3)-CH_2-CH_2-CO-$

gebunden enthalten.

7. Bei 25°C flüssige Polyester-polyole, die Einheiten mit der Struktur

$-OC-CH(C_2H_5)-CH_2-CO-$

gebunden enthalten.

8. Bei 25°C flüssige Polyester-polyole, die Einheiten mit den Strukturen

$-OC-CH(CH_3)-CH_2-CH_2-CO-$und
$-O-CH_2-CH(CH_3)-CH_2-CH_2-CH_2-O-$und/oder
$-O-CH_2-CH(C_2H_5)-CH_2-CH_2-O-$

gebunden enthalten.

9. Bei 25°C flüssige Polyester-polyole, die Einheiten mit den Strukturen

$-OC-CH(C_2H_5)-CH_2-CO-$und
$-O-CH_2-CH(CH_3)-CH_2-CH_2-CH_2-O-$und/oder
$-O-CH_2-CH(C_2H_5)-CH_2-CH_2-O-$

gebunden enthalten.

10. Polyester-polyole nach den Ansprüchen 1 bis 9, dadurch gekennzeichnet, daß diese

eine durchschnittliche Funktionalität von 2 bis 3,
eine Hydeoxylzahlvon 25 bis 400,
eine Säurezahl von kleiner als 10 und
eine Viskosität bei 25°C von 200 bis $10^5$m.Pa.s besitzen.

11. Polyester-polyole nach den Ansprüchen 1 bis 9, dadurch gekennzeichnet, daß sie zu mindestens 10 Gew.-%, bezogen auf das Gesamtgewicht, aus Einheiten mindestens einer der Strukturen

$-O-CH_2-CH(CH_3)-CH_2-CH_2-CH_2-O-$,
$-O-CH_2-CH(C_2H_5)-CH_2-CH_2-O-$,
$-OC-CH(CH_3)-CH_2-CH_2-CO-$oder
$-OC-CH(C_2H_5)-CH_2-CO-$

bestehen.

12. Polyester-polyole nach Anspruch 1, hergestellt durch Polykondensation oder Umesterung in Gegenwart oder Abwesenheit von Katalysatoren von mindestens einer aliphatischen Polycarbonsäure und/oder mindestens einem aliphatischen Polycarbonsäurederivat mit mindestens einem mehrwertigen aliphatischen Alkohol, dadurch gekennzeichnet, daß man als mehrwertigen Alkohol verwendet:
2-Methylpentandiol-1,5,
2-Ethylbutandiol-1,4,
Mischungen aus 2-Methylpentandiol-1,5 und 2-Ethylbutandiol-1,4 im Gewichtsverhältnis 1:99 bis 99:1, oder Mischungen aus 2-Methylpentandiol-1,5 und/oder 2-Ethylbutandiol-1,4 und mindestens einem linearen oder verzweigten, gegebenenfalls Etherbrücken aufweisenden aliphatischen 2-bis 4-wertigen Alkohol mit einem Gehalt an 2-Methylpentandiol-1,5 und/oder 2-Ethylbutandiol-1,4 von mindestens 20 Gew.-%, bezogen auf das Gewicht der Alkoholmischung.

13. Polyester-polyole nach den Ansprüchen 1 und 12, dadurch gekennzeichnet, daß die Mischung aus mehrwertigen aliphatischen Alkoholen besteht aus

(i) 20 bis ungefähr 100 Gew.-% 2-Methylpentandiol-1,5 und/oder 2-Ethylbutandiol-1,4 und

(ii) 80 bis ungefähr 0 Gew.-% mindestens eines linearen oder verzweigten Alkandiols mit 2 bis 12 Kohlenstoffatomen, eines Polyoxialkylen-diols mit einem Molekulargewicht von 106 bis 622, eines linearen oder verzweigten Alkantriols mit 3 bis 6 Kohlenstoffatomen und/oder Pentaerythrit, wobei die Gew.-% bezogen sind auf das Gesamtgewicht der Alkoholmischung.

14. Polyester-polyole nach den Ansprüchen 1 und 12, dadurch gekennzeichnet, daß die Mischung aus mehrwertigen aliphatischen Alkoholen besteht aus

(i) 20 bis ungefähr 100 Gew.-% 2-Methylpentandiol-1,5 und/oder 2-Ethylbutandiol-1,4 und

(ii) 80 bis ungefähr 0 Gew.-% Ethandiol, 1,2-bzw. 1,3-Propandiol, 1,4-Butandiol, 1,5-Pentandiol, 1,6-Hexandiol, Diethylen-glykol, Dipropylen-glykol, Glycerin, Trimethylolpropan oder einer Mischung aus mindestens zwei der mehrwertigen aliphatischen Alkohole (ii),

wobei die Gew.-% bezogen sind auf das Gesamtgewicht der Alkoholmischung.

15. Polyester-polyole nach Anspruch 1, hergestellt durch Polykondensation oder Umesterung in Gegenwart oder Abwesenheit von Katalysatoren von mindestens einer aliphatischen Polycarbonsäure und/oder mindestens einem aliphatischen Polycarbonsäurederivat mit mindestens einem mehrwertigen aliphatischen Alkohol, dadurch gekennzeichnet, daß man als aliphatische Polycarbonsäuren oder -derivate verwendet:

2-Methylglutarsäure,
2-Methylglutarsäure-dimethylester,
2-Ethylbernsteinsäure,
2-Ethylbernsteinsäure-dimethylester,
Mischungen aus mindestens zwei der genannten Verbindungen, oder Mischungen aus 2-Methylglutarsäure, -dimethylester, 2-Ethylbernsteinsäure und/oder -dimethylester und mindestens einer aliphatischen Dicarbonsäure mit 2 bis 12 Kohlenstoffatomen, einer cycloaliphatischen Dicarbonsäure mit 6 bis 20 Kohlenstoffatomen und/oder einer aromatischen Dicarbonsäure mit 8 bis 20 Kohlenstoffatomen und/oder den entsprechenden Dicarbonsäuremonoalkylestern, -dialkylestern mit 1 bis 4 Kohlenstoffatomen im Alkylrest oder -anhydriden mit einem Gehalt an 2-Methylglutarsäure, -dimethylester, 2-Ethylbernsteinsäure und/oder -dimethylester von mindestens 20 Gew.-%, bezogen auf das Gewicht der Mischung.

16. Polyester-polyole nach den Ansprüchen 1 und 15, dadurch gekennzeichnet, daß die Mischung aus Polycarbonsäuren und/oder -derivaten besteht aus

(iii) 20 bis ungefähr 100 Gew.-% 2-Methylglutarsäure, -dimethylester, 2-Ethylbernsteinsäure und/oder 2-Ethylbernsteinsäuredimethylester und

(iv) 80 bis ungefähr 0 Gew.-% Bernstein-, Glutar-, Adipin-, Phthalsäure oder einer Mischung aus mindestens zwei der genannten Dicarbonsäuren sowie der entsprechenden Dicarbonsäuremonoalkylestern, -dialkylestern und/oder -anhydriden, wobei die Gew.-% bezogen sind auf das Gesamtgewicht der Mischung.

17. Verfahren zur Herstellung von bei 25°C flüssigen Polyester-polyolen, die Einheiten mit mindestens einer der Strukturen

$-O-CH_2-CH(CH_3)-CH_2-CH_2-CH_2-O-$,
$-O-CH_2-CH(C_2H_5)-CH_2-CH_2-O-$,
$-OC-CH(CH_3)-CH_2-CH_2-CO-$oder
$-OC-CH(C_2H_5)-CH_2-CO-$

gebunden enthalten, durch Polykondensation oder Umesterung in Gegenwart oder Abwesenheit von Katalysatoren von mindestens einer aliphatischen Polycarbonsäure und/oder mindestens einem aliphatischen Polycarbonsäurederivat mit mindestens einem mehrwertigen aliphatischen Alkohol, dadurch gekennzeichnet, daß man verwendet als Polycarbonsäuren und/oder -derivate:
2-Methylglutarsäure, 2-Ethylbernsteinsäure, aliphatische Dicarbonsäuren mit 2 bis 12 Kohlenstoffatomen, cycloaliphatische Dicarbonsäuren mit 6 bis 20 Kohlenstoffatomen, aromatische Dicarbonsäuren mit 8 bis 20 Kohlenstoffatomen sowie die entsprechenden Dicarbonsäuremonoalkylester, -dialkylester mit 1 bis 4 Kohlenstoffatomen im Alkylrest oder -anhydride oder Mischungen aus mindestens zwei der genannten Dicarbonsäuren und/oder -derivate
und als mehrwertige aliphatische Alkohole:
2-Methylpentandiol-1,5, 2-Ethylbutandiol-1,4-lineare oder verzweigte, gegebenenfalls Etherbrücken aufweisende 2-bis 4-wertige aliphatische Alkohole oder Mischungen aus mindestens zwei der mehrwertigen aliphatischen Alkohole mit der Maßgabe, daß die eingesetzten Ausgangsstoffe mindestens eine Verbindung aus der Gruppe 2-Methylpentandiol-1,5, 2-Ethylbutandiol-1,4, 2-Methylglutarsäure, 2-Ethylbernsteinsäure oder der entsprechenden Dicarbonsäurederivate enthalten.

18. Verfahren zur Herstellung von bei 25°C flüssigen Polyester-polyolen nach Anspruch 17, dadurch gekennzeichnet, daß die Polyester-polyole eine durchschnittliche Funktionalität von 2 bis 3,
eine Hydroxylzahl von 25 bis 400,
eine Säurezahl von kleiner als 10 und
eine Viskosität bei 25°C von 200 bis $10^5$m.Pa.s besitzen.

19. Verwendung von Polyester-polyolen nach Anspruch 1 zur Herstellung von kompakten oder zelligen Polyurethan-oder Polyurethan-Polyharnstoff-Kunststoffen nach dem Polyisocyanat-polyadditionsverfahren.

20. Verwendung von Polyester-polyolen nach Anspruch 1 zur Herstellung von kompakten oder zelligen Polyurethan-oder Polyurethan-Polyharnstoff-Elastomeren.